# EUROPEAN PATENT APPLICATION

(11) **EP 1 607 941 A1**
(43) Date of publication of application: **21.12.2005**
(21) Application number: 04026515.9
(22) Date of filing: 09.11.2004
(51) Int. Cl.: G11B 5/73, G11B 5/84

(54) **Magnetic recording medium, method of producing magnetic recording medium and magnetic storage apparatus**

(30) Priority: 14.06.2004 JP 2004175720
(71) Applicant: FUJITSU LIMITED, Kawasaki-shi, Kanagawa 211-8588 (JP)
(72) Inventor: Sato, Kenji, c/o Yamagata Fujitsu Limited, Higashine-shi Yamagata 999-3701 (JP)
(74) Representative: Seeger, Wolfgang

(57) **Abstract**

A magnetic recording medium has a seed layer provided on a substrate surface, an underlayer provided on the seed layer, and a recording layer provided on the underlayer. Information is recorded in the recording layer by magnetizing the recordig layer in a recording direction. The seed layer is formed by a polycrystal of crystal grains made of an alloy material having a B2 crystal structure, and a [100] crystal orientation of the crystal grains are inclined towards one of two sides partitioned by a plane that is formed by the recording direction and a substrate normal which is normal to the substrate surface.

## Description

### BACKGROUND OF THE INVENTION

### 1. Field of the Invention

The present invention generally relates to magnetic recording media, methods of producing magnetic recording media and magnetic storage apparatus, and more particularly to a magnetic recording medium for use in longitudinal magnetic recording, a method of producing such a magnetic recording medium and a magnetic storage apparatus using such a magnetic storage apparatus.

### 2. Description of the Related Art

Recently, storage capacities of magnetic storage apparatuses used in personal computers and dynamic image recording apparatuses for home use have increased considerably. For example, there are magnetic disk drives, mainly for dynamic image recording, which have a storage capacity exceeding 100 GB. It is expected that the demands to further increase the storage capacity and to further reduce the cost of magnetic disk drives will continue to increase.

Presently, in magnetic disk drives for use in longitudinal magnetic recording (or in-plane magnetic recording), active research is being made to increase the recording density so as to realize the large storage capacity. Improvements in both the signal-to-noise ratio (SNR) of magnetic disks and the sensitivity of magnetic heads have led to an in-plane recording density exceeding 100 Gbits/in².

A magnetic disk is produced by successively forming an underlayer, a magnetic layer and a protection layer on a substrate. In order to improve the electromagnetic conversion characteristics of the magnetic disk, such as the resolution, non linear transition shift (NLTS) and SNR, there is a technique that subjects the substrate surface to a mechanical texturing in a circumferential direction of the magnetic disk. By providing the mechanical texturing, axes of easy magnetization of a CoCr alloy forming the magnetic layer become aligned in the circumferential direction, to thereby improve the coercivity and the orientation ratio (OR) in the circumferential direction. This technique can achieve a high recording density, but because the substrate surface is subjected to the mechanical texturing, the shape of the textured substrate surface is inherited to the surface shape of the magnetic disk. In other words, the surface roughness of the disk surface increases due to the mechanical texturing of the substrate surface. In the case where the disk surface has the increased surface roughness, it is difficult to improve the electromagnetic conversion characteristics of the magnetic disk by reducing the distance between a magnetic head and the disk surface, and there is a limit to increasing the recording density according to this approach.

In order to improve the orientation of the axes of easy magnetization of the magnetic layer in the circumferential direction, a Japanese Laid-Open Patent Application No.8-7250 proposes a method of depositing a Cr underlayer and the magnetic layer with an oblique evaporation. Further, Japanese Laid-Open Patent Applications No.2002-203312 and No.2002-260218 propose methods of sputtering an underlayer at an inclination between the substrate and the underlayer.

However, the Japanese Laid-Open Patent Application No.8-7250 uses Cr for the underlayer that is deposited at the inclination, and the Japanese Laid-Open Patent Applications No.2002-203312 and No.2002-260218 use Cr alloys, Ni alloys and Co alloys for the seed layer that is sputtered at the inclination. Other materials have not been studied in these Japanese Laid-Open Patent Applications No.8-7250, No.2002-203312 and No.2002-260218.

Moreover, according to the oblique deposition of the Japanese Laid-Open Patent Application No.8-7250, the incident angle of the depositing atoms is limited by a mask which partially opens in the circumferential direction, and the film thickness in the circumferential direction is made uniform by rotating the substrate. According to the Japanese Laid-Open Patent Application 2002-203312, the incident angle of the sputtering grains is limited by a mask which opens in a vicinity of the substrate center or opens in a ring-shape at a predetermined radial position. According to such deposition or sputtering, most of the depositing or sputtering grains will not reach the substrate surface, and the productivity is poor. Furthermore, the film thickness distribution becomes such that the film thickness easily increases in the circumferential direction in the case of the Japanese Laid-Open Patent Application No.8-7250 and the film thickness easily increases in the radial direction in the case of the Japanese Laid-Open Patent Application No.2002-203312. When such film thickness distributions occur, the orientation distribution becomes such that deviations occur in the orientation of the axes of easy magnetization of the magnetic layer, and inconsistencies in the electromagnetic conversion characteristic of the magnetic disk increase within the same disk surface, to thereby make it difficult to further increase the recording density.

### SUMMARY OF THE INVENTION

Accordingly, it is a general object of the present invention to provide a novel and useful magnetic recording medium, method of producing magnetic recording medium and magnetic storage apparatus, in which the problems described above are suppressed.

Another and more specific object of the present invention is to provide a magnetic recording medium, a method of producing magnetic recording medium and a magnetic storage apparatus, which can improve the orientation of the axes of easy magnetization of the magnetic layer, that is, improve the circumferential orientation of the axes of easy magnetization of the magnetic layer in the case where the magnetic recording medium has a disk-shape, and improve the recording density of the magnetic recording medium.

Still another object of the present invention is to provide a magnetic recording medium comprising a substrate having a substrate surface; a seed layer provided on the substrate surface; an underlayer provided on the underlayer; and a recording layer provided on the underlayer, wherein information is recorded in the recording layer by magnetizing the recording layer in a recording direction, and the seed layer is formed by a polycrystal of crystal grains made of an alloy material having a B2 crystal structure, and a [100] crystal orientation of the crystal grains are inclined towards one of two sides partitioned by a plane that is formed by the recording direction and a substrate normal which is normal to the substrate surface. According to the magnetic recording medium of the present invention, it is possible to improve the orientation of the axes of easy magnetization of the magnetic layer and improve the recording density of the magnetic recording medium.

A further object of the present invention is to provide a method of producing a magnetic recording medium having a recording layer that is magnetized in a recording direction to record information in the recording layer, comprising the steps of (a) forming a seed layer on a substrate surface; (b) forming an underlayer on the seed layer; and (c) forming the recording layer on the underlayer, wherein the step (a) uses a target that is made of an alloy material having a B2 crystal structure and confronts the substrate surface, and sputters, with respect to the substrate surface, crystal grains of the target from one of two sides partitioned by a first plane that is formed by the recording direction and a substrate normal which is normal to the substrate surface in a predetermined direction inclined with respect to the substrate normal. According to the method of producing the magnetic recording medium according to the present invention, it is possible to improve the orientation of the axes of easy magnetization of the magnetic layer and improve the recording density of the magnetic recording medium.

Another object of the present invention is to provide a magnetic storage apparatus comprising at least one magnetic recording medium; and a head to record and/or reproduce information to and/or from the magnetic recording medium, wherein the magnetic recording medium comprises a substrate having a substrate surface, a seed layer provided on the substrate surface, an underlayer provided on the underlayer, and a recording layer provided on the underlayer, information is recorded in the recording layer by magnetizing the recording layer in a recording direction, and the seed layer is formed by a polycrystal of crystal grains made of an alloy material having a B2 crystal structure, and a [100] crystal orientation of the crystal grains are inclined towards one of two sides partitioned by a plane that is formed by the recording direction and a substrate normal which is normal to the substrate surface. According to the magnetic storage apparatus of the present invention, it is possible to improve the orientation of the axes of easy magnetization of the magnetic layer and improve the recording density of the magnetic recording medium.

Other objects and further features of the present invention will be apparent from the following detailed description when read in conjunction with the accompanying drawings.

### BRIEF DESCRIPTION OF THE DRAWINGS

FIG. 1 is a cross sectional view showing an embodiment of a magnetic recording medium according to the present invention;
FIG. 2 is a diagram schematically showing the orientation of crystal grains in the embodiment of the magnetic recording medium;
FIG. 3 is a diagram schematically showing the orientation of crystal lattices of crystal grains forming a seed layer;
FIGS. 4A through 4C are cross sectional views for explaining an embodiment of a method of producing the magnetic recording medium according to the present invention;
FIG. 5 is a perspective view generally showing an important part of a sputtering apparatus;
FIG. 6 is a cross sectional view showing an important part of the sputtering apparatus shown in FIG. 5;
FIG. 7 is a diagram-showing rocking curves of AlRu layers of embodiment samples and an comparison example;
FIG. 8 is a diagram showing a relationship of incident angles of AlRu seed layers and crystal orientation inclination angles of the embodiment samples and the comparison example;
FIG. 9 is a diagram showing rocking curves of CoCrPt₁₂B₇Cu₄ second magnetic layers of the embodiment sample and the comparison example;
FIG. 10 is a diagram showing magnetic characteristics of magnetic disks according to the embodiment samples and the comparison example;
FIGS. 11A and 11B are diagrams showing electromagnetic conversion characteristics of magnetic disks according to the embodiment samples and the comparison example;
FIG. 12 is a diagram showing magnetic characteristics of magnetic disks according to the embodiment samples and the comparison example;
FIGS. 13A and 13B are diagrams showing electromagnetic conversion characteristics of magnetic disks according to the embodiment samples and the comparison example; and
FIG. 14 is a plan view showing an important part of an embodiment of a magnetic storage apparatus according to the present invention.

### DESCRIPTION OF THE PREFERRED EMBODIMENTS

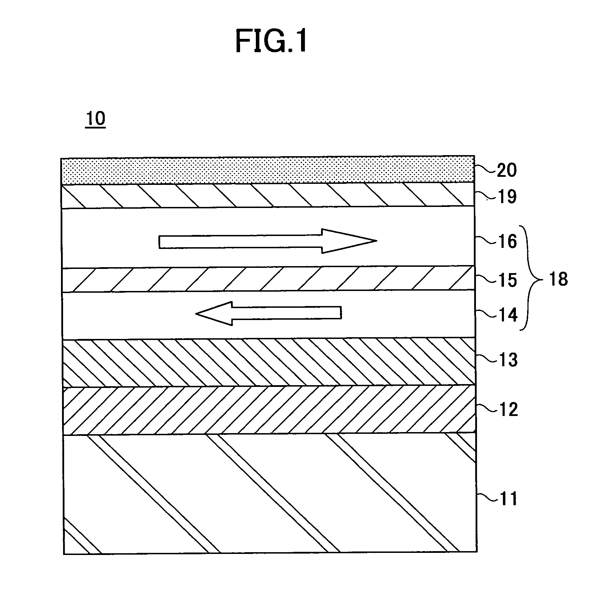

FIG. 1 is a cross sectional view showing an embodiment of a magnetic recording medium according to the present invention. A magnetic recording medium 10 shown in FIG. 1 has a disk substrate 11, and a seed layer 12, an underlayer 13, a first magnetic layer 14, a nonmagnetic coupling layer 15, a second magnetic layer 16, a protection layer 19 and a lubricant layer 20 that are successively formed on the disk substrate 11. The first magnetic layer 14, the nonmagnetic coupling layer 15 and the second magnetic layer 16 form a recording layer 18. The recording layer 18 has an exchange-coupled structure in which the first and second magnetic layers 14 and 16 are antiferromagnetically exchange-coupled via the nonmagnetic coupling layer 15. In a state where no external magnetic field is applied on the magnetic recording medium 10, magnetizations of the first and second magnetic layers 14 and 16, oriented in an in-plane direction, are mutually antiparallel.

This embodiment is characterized by the seed layer 12. By the provision of this seed layer 12, axes of easy magnetization of crystal grains forming the recording layer 18 are oriented in a circumferential direction of the disk substrate 11, even if no mechanical texturing is provided on the surface of the disk substrate 11 and/or the seed layer 12. As a result, a circumferential coercivity Hcc, an orientation Hcc/Hcr, and a circumferential coercivity squareness ratio S* of the magnetic recording medium 10 (that is, the recording layer 18) improve, where Hcr denotes a radial direction coercivity.

For example, the disk substrate 11 is made up of a plastic substrate, a glass substrate, a NiP-plated Al alloy substrate, a Si substrate or the like having a disk-shape. The surface of the disk substrate 11 may or may not be textured. For example, the surface of the plastic substrate, the glass substrate or the NiP-plated Al alloy substrate may be textured by being subjected to a mechanical texturing or a laser texturing in the circumferential direction, that is, in a longitudinal direction of tracks formed on the magnetic recording medium 10.

The seed layer 12 is made of a polycrystal having crystal grains formed by an alloy having a B2 crystal structure, such as AlRu, NiAl and FeAl. The seed layer 12 is formed by an inclined (or oblique) sputtering which will be described later. When the seed layer 12 is formed by the inclined sputtering, the crystal grains of the seed layer 12 grow obliquely to a normal to the substrate surface of the disk substrate 11.

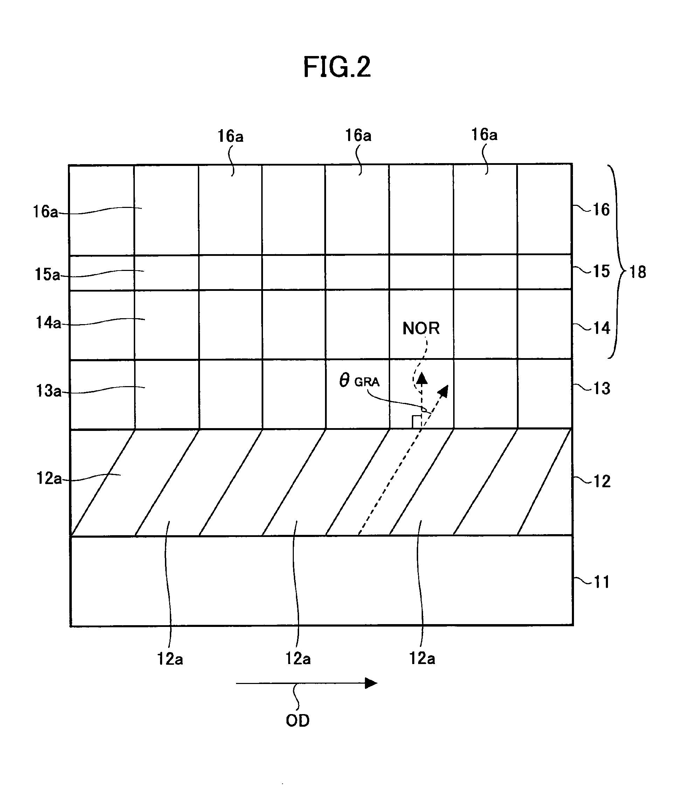

FIG. 2 is a diagram schematically showing the orientation of crystal grains in this embodiment of the magnetic recording medium. In FIG. 2, the crystal grains of the seed layer 12 are formed obliquely, that is, inclined towards the outer peripheral side of the disk substrate 11, where an arrow OD indicates the outer peripheral side of the disk substrate 11. An inclination angle θ_{GRA} of the crystal grains of the seed layer 12 with respect to a substrate normal NOR which is normal to the substrate surface is set with a range that is less than or equal to a range (from 38.7 degrees to less than 90 degrees) of the incident angle of the embodiment samples which will be described later. The underlayer 13, the first magnetic layer 14, the nonmagnetic coupling layer 15 and the second magnetic layer 16 that are successively formed on the seed layer 12 are formed by normal sputtering, that is, a perpendicular sputtering, such that the crystal grains are formed perpendicularly to the substrate surface. Hence, crystal grains 13a, 14a, 15a and 16a of the underlayer 13, the first magnetic layer 14, the nonmagnetic coupling layer 15 and the second magnetic layer 16 respectively grow in the direction of the substrate normal NOR.

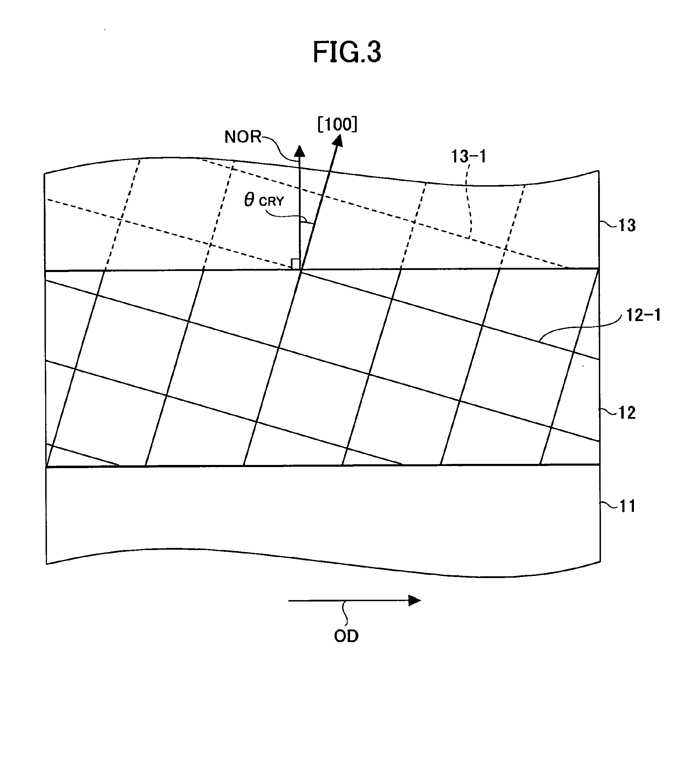

FIG. 3 is a diagram schematically showing the orientation of crystal lattices of the crystal grains forming the seed layer 12. In FIG. 3, a lattice face 12-1 of the crystal lattice forming the seed layer 12, such as the (100) face, for example, is inclined from the substrate in-plane direction towards the outer peripheral side (direction OD) of the disk substrate 11. The inclination angle of the lattice face 12-1 may be described by an angle θ_{CRY} formed by the substrate normal NOR and the [100] crystal orientation, and this angle θ_{CRY} will be referred to as a crystal orientation inclination angle. According to the embodiment samples described later, the orientation of the crystal grains in the circumferential direction improves and the electromagnetic conversion characteristics improve when the crystal orientation inclination angle θ_{CRY} is set in a range from 2.1 degrees to less than 5.4 degrees.

When the crystal lattices of the seed layer 12 are formed at an inclination, the crystal lattices of the underlayer 13 formed on the seed layer 12 are also formed at an inclination, and this inclination is inherited to the first magnetic layer 14 and the second magnetic layer 16 shown in FIGS. 1 and 2. Of the crystal grains forming the first and second magnetic layers 14 and 16, the present inventor confirmed that the crystal grains having the axes of easy magnetization inclined in the radial direction have the axes of easy magnetization inclined by approximately 2.7 degrees from the in-plane direction. Hence, the formation of the seed layer 12 by the inclined sputtering affects the crystal orientations of the first and second magnetic layers 14 and 16. It may be regarded that the phenomenon in which the axes of easy magnetization of the first and second magnetic layers 14 and 16 that are oriented in the circumferential direction of the disk substrate 11 increase probability-wise is also similarly induced by the inclination of the crystal lattices of the seed layer 12, and that orientation of the crystal grains of the first and second magnetic layers 14 and 16 in the circumferential direction is improved thereby. Alternatively, it may be regarded that since the crystal lattices of the underlayer 13 are inclined towards the outer peripheral side of the disk substrate 11 while the crystal grains of the underlayer 13 grow in the direction of the substrate normal NOR, compressive stress is applied to the crystal lattices at the grain interface of the crystal grains to expand the crystal lattices in the circumferential direction, to thereby orient the c-axes of the first and second magnetic layers 14 and 16 in the circumferential direction.

The thickness of the seed layer 12 is set in a range of 5 nm to 30 nm. From the point of view of obtaining satisfactory electromagnetic conversion characteristics of the magnetic recording medium 10, the thickness of the seed layer 12 is preferably set in a range of 5 nm to 15 nm if the surface of the disk substrate 11 or another seed layer arbitrarily provided under the seed layer 12 is mechanically textured, and is preferably set in a range of 5 nm to 25 nm if no mechanical texturing is applied to the surface of the disk substrate 11 or the other seed layer arbitrarily provided under the seed layer 12.

A layer made of a material similar to that used for the seed layer 12 may be formed directly on the seed layer 12 by perpendicular sputtering. For example, this layer has crystal grains thereof grown in the direction of the substrate normal NOR, and has a thickness in a range of 5 nm to 30 nm. Crystal lattices of this layer are inclined by inheriting the inclination of the crystal lattices of the seed layer 12 provided underneath, and effects similar to those obtained by performing the inclined sputtering are obtainable, to thereby enable the thickness of the seed layer 12 to be reduced.

For example, the underlayer 13 is made of Cr or a Cr-X alloy, where X = Mo, W, V, B, Mo or alloys thereof. As described above, the underlayer 13 is epitaxially grown on the seed layer 12, and the (001) or (112) face is oriented in a direction suitable for the crystal growth. The underlayer 13 may be made up of a stacked structure that includes a plurality of stacked layers made of Cr or the Cr-X alloy. By using the stacked structure for the underlayer 13, it is possible to suppress the crystal grains of the underlayer 13 from becoming large, and to suppress the crystal grains of the first and second magnetic layers 14 and 16 from becoming large.

Returning now to the description of FIG. 1, the first magnetic layer 14 has a thickness in a range of 0.5 nm to 20 nm, and is made of Co, Ni, Fe, Co alloy, Ni alloy, Fe alloy or the like, for example. CoCrTa and CoCrB are preferable, and a CoCrPt-M alloy may be used as the Co alloy forming the first magnetic layer 14, where M = B, Mo, Nb, Ta, W, Cu or alloys thereof. The first magnetic layer 14 may be made up of a stacked structure that includes a plurality of stacked layers made of Co, Ni, Fe, Co alloy, Ni alloy, Fe alloy or the like. By using the stacked structure for the first magnetic layer 14, it is possible to improve the orientation of the crystal grains of the second magnetic layer 16.

For example, the nonmagnetic coupling layer 15 is made of Ru, Rh, Ir, Ru alloy, Rh alloy, Ir alloy or the like. Rh and Ir have an fcc structure, while Ru has a hcp structure. Ru has a lattice constant a = 0.27 nm which is close to a lattice constant a = 0.25 nm of the CoCrPt alloy that is used for the first magnetic layer 14 and the second magnetic layer 16, and thus, Ru and the Ru alloy are preferably used for the nonmagnetic coupling layer 15 when the CoCrPt alloy is used for the first and second magnetic layers 14 and 16. The Ru alloy may include at least one of Co, Cr, Fe, Ni, Mn or alloys thereof.

In addition, the thickness of the nonmagnetic coupling layer 15 is in a range of 0.4 nm to 1.5 nm, and preferably in a range of 0.6 nm to 0.9 nm. Depending on the Ru-content within the Ru alloy in the case of the nonmagnetic coupling layer 15 made of the Ru alloy, the thickness of the nonmagnetic coupling layer 15 may be in a range of 0.8 nm to 1.4 nm. The first and second magnetic layers 14 and 16 are exchange-coupled via the nonmagnetic coupling layer 15, and by setting the thickness of the nonmagnetic coupling layer 15 within the above described range, the first and second magnetic layers 14 and 16 become antiferromagnetically coupled. In a state where no external magnetic field is applied to the magnetic recording medium 10, magnetizations of the first and second magnetic layers 14 and 16 become mutually antiparallel as indicated arrows in FIG. 1. The exchange coupling state of the first and second magnetic layers 14 and 16 depends on the thickness of the nonmagnetic coupling layer 15, and the magnetizations of the first and second magnetic layers 14 and 16 reciprocate between the mutually antiparallel state and a mutually parallel state depending on the thickness of the nonmagnetic coupling layer 15. It is particularly preferable to set the thickness of the nonmagnetic coupling layer 15 to match a first antiferromagnetic peak where the magnetizations of the first and second magnetic layers 14 and 16 become mutually antiparallel and the thickness of the nonmagnetic coupling layer 15 is the thinnest.

The second magnetic layer 16 has a thickness in a range of 5 nm to 20 nm, and is made of Co, Ni, Fe, Co alloy, Ni alloy, Fe alloy and the like, similarly as in the case of the first magnetic layer 14. It is preferable that a product of a remanent magnetization Mr1 and a thickness t1 of the first magnetic layer 14 (that is, a remanent magnetization and thickness product Mr1 x t1) and a product of a remanent magnetization Mr2 and a thickness t2 of the second magnetic layer 16 (that is, a remanent magnetization and thickness product Mr2 x t2) satisfy a relationship (Mr1 x t1) < (Mr2 x t2). The second magnetic layer 16 has the magnetization in the same direction as the total remanent magnetization of the magnetic recording medium 10, and information can be written accurately in the second magnetic layer 16 in correspondence with switching positions of the recording magnetic field of the magnetic head. Of course, the remanent magnetization and thickness product Mr1 x t1 and the remanent magnetization and thickness product Mr2 x t2 may satisfy a relationship (Mr1 x t1) > (Mr2 x t2). As the thicknesses of the first and second magnetic layers 14 and 16 are reduced, the above described problems encountered at the time of the recording are suppressed.

The first magnetic layer 14 and the second magnetic layer 16 may have different compositions. For example, the material used for the second magnetic layer 16 is selected from materials which result in a larger anisotropic magnetic field than the material used for the first magnetic layer 14. The alloy used for the second magnetic layer 16 may be added with Pt while no Pt is added for the alloy used for the first magnetic layer 16 or, the Pt-content (in atomic percent) of the alloy may be larger for the second magnetic layer 16 than the first magnetic layer 14. For example, when using CoCr alloys for the first and the second magnetic layers 14 and 16, only the second magnetic layer 16 may be added with Pt. On the other hand, when using CoCrPt alloys for the first and second magnetic layers 14 and 16, CoCrPt₈ may be used for the first magnetic layer 14 and CoCrPt₁₂ may be used for the second magnetic layer 16, where the numeral affixed to Pt denotes atomic percent (at.%). The atomic percent (at.%) of other elements are indicated similarly in this specification.

Therefore, in the recording layer 18, the first and second magnetic layers 14 and 16 are antiferromagnetically exchange-coupled via the nonmagnetic coupling layer 15. Hence, the apparent volume of the recording layer 18 becomes substantially equal to a sum of the volumes of the first and second magnetic layers 14 and 16, which is large compared to the case where the recording layer is formed by a single-layer structure, to thereby improve the thermal stability of the magnetizations (or written bits).

The recording layer 18 may be formed by a stacked structure having more than 2 magnetic layers. In this case, the magnetic layers of the stacked structure are exchange-coupled, and at least two magnetic layers are antiferromagnetically exchange-coupled.

Of course, the recording layer 18 may be formed by a single magnetic layer which does not employ the exchange coupling, similarly as in the case of the conventional magnetic recording media.

The protection layer 19 has a thickness in a range of 0.5 nm to 10 nm, and preferably in a range of 0.5 nm to 5 nm, and is made of Diamond-Like Carbon (DLC), carbon nitride, amorphous carbon and the like, for example.

The lubricant layer 20 is made of an organic liquid lubricant having perfluoropolyether as a main chain and -OH, phenyl, benzene ring or the like as the terminal functional group. More particularly, ZDol manufactured by Monte Fluos (terminal functional group: -OH), AM3001 manufactured by Ausimonoto (terminal functional group: benzene ring), Z25 manufactured by Monte Fluos, and the like, with a thickness in a range of 0. 5 nm to 3.0 nm, may be used for the lubricant layer 20. The lubricant may be appropriately selected depending on the material used for the protection layer 19. Depending on the kind of protection layer 19 used, the lubricant layer 20 may be omitted.

Another seed layer (not shown) may be provided between the disk substrate 11 and the seed layer 12. This other seed layer may be made of a nonmagnetic material such as NiP, CoW and CrTi. The surface of this other seed layer may or may not be textured. When using an amorphous material such as NiP for this other seed layer, it is preferable that the surface of this other seed layer is oxidized. This other seed layer made of NiP, that is preferably oxidized, improves the c-axis in-plane orientation of the first and second magnetic layers 14 and 16. Of course, suitable materials other than NiP may be used to improve the c-axis orientation of the first and second magnetic layers 14 and 16.

A nonmagnetic intermediate layer (not shown) may be provided between the underlayer 13 and the first magnetic layer 14. The nonmagnetic intermediate layer is made of a nonmagnetic alloy having an hcp structure, such as a CoCr alloy added with an element or an alloy M1, where M1 = Pt, B, Mo, Nb, Ta, W, Cu or alloys thereof, and has a thickness in a range of 0.5 nm to 5 nm, for example. The nonmagnetic intermediate layer grows by inheriting the crystallinity and crystal grain size of the underlayer 13, and improves the crystallinity of the first and second magnetic layers 14 and 16 which are epitaxially grown above the nonmagnetic intermediate layer. In addition, the nonmagnetic intermediate layer reduces the grain size deviation width in the distribution of the crystal grain (magnetic grain) sizes, and promotes the orientation of the c-axis in the in-plane direction. The nonmagnetic intermediate layer may be formed by a stacked structure that is made up of a plurality of layers made of the nonmagnetic alloys described above, and in this case, it is possible to further improve the crystal orientations of the first and second magnetic layers 14 and 16. The lattice constant of the nonmagnetic intermediate layer may be set to differ by several % with respect to the lattice constant of the first magnetic layer 14 or the second magnetic layer 16, so as to generate an internal stress in the in-plane direction at the interface of the nonmagnetic intermediate layer and the first magnetic layer 14 or, within the first magnetic layer 14, so as to increase the coercivity of the first magnetic layer 14.

According to this embodiment, the seed layer 12 is formed by a polycrystal of crystal grains made of an alloy material having a B2 crystal structure, and a [100] crystal orientation of the crystal grains are inclined towards one of two sides partitioned by a plane that is formed by the recording direction and substrate normal NOR which is normal to the substrate surface. The B2 crystal structure has atoms A and atoms B of an alloy AB arranged alternately at the adjacent atomic sites of the bcc crystal structure. In other words, the seed layer 12 is deposited so that the [100] crystal orientation of the crystal lattices forming the seed layer 12 is inclined towards the outer peripheral side of the disk substrate 11 relative to the substrate normal NOR. Hence, the crystal orientation of the recording layer 18 in the circumferential direction is improved, to thereby improve the static magnetic characteristics and the electromagnetic conversion characteristics, and as a result, it is possible to increase the recording density of the magnetic recording medium 10 and realize a high recording density.

The [100] crystal orientation includes the [010] crystal orientation and the [001] crystal orientation that are equivalent to the [100]crystal orientation. When the inclination angle relative to the substrate normal NOR is considered in this specification, it is assumed that the [100] crystal orientation indicates the [100] crystal orientation or a crystal orientation that has a smallest angle relative to the substrate normal NOR.

In addition, the crystal orientation of the second magnetic layer 16 can be improved without providing the mechanical texturing on the substrate surface or the like. For this reason, the surface smoothness of the magnetic recording medium 10 is improved, to thereby enable reduction in the spacing between the recording element and/or the reproducing element and the recording layer 18, and the recording density of a magnetic storage apparatus which uses the magnetic recording medium 10 can further be improved.

Next, a description will be given of a method of producing the magnetic recording medium according to the present invention.

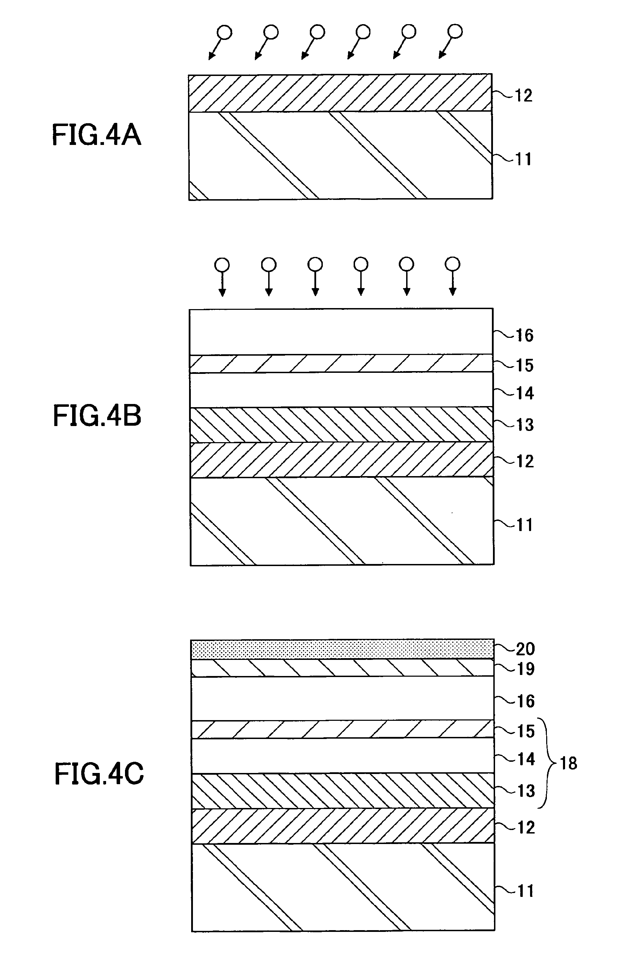

FIGS. 4A through 4C are cross sectional views for explaining an embodiment of the method of producing the magnetic recording medium according to the present invention.

In a step shown in FIG. 4A, after the substrate surface of the disk substrate 11 is cleaned and dried, the disk substrate 11 is heated to 180°C within a vacuum atmosphere by use of a pyrolytic boron nitride (PBN) heater, for example.

In addition, in the step shown in FIG. 4A, a sputtering apparatus is used to form the seed layer 12 on the substrate surface of the disk substrate 11 by the inclined sputtering. The inside of the chamber is once exhausted to a vacuum of 10⁻⁵ Pa or less, and an Ar gas pressure is set to 0.67 Pa and the power is set to 2 kW, so as to form the seed layer 12 to a thickness of 10 nm by the D.C. magnetron sputtering with a discharge time of 4 seconds, for example. The inclined sputtering, which forms an important part of this embodiment, is carried out in the following manner.

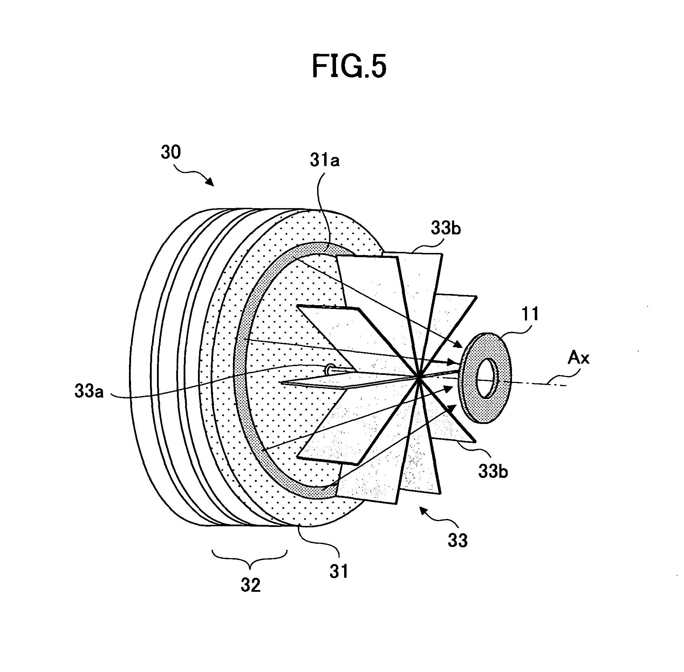

FIG. 5 is a perspective view generally showing an important part of the sputtering apparatus. FIG. 5 shows the inside of a chamber (not shown) of a sputtering apparatus 30. In the sputtering apparatus 30, a circular sputtering target 31 made of a material having a B2 crystal structure, such as an AlRu alloy, is arranged so that a sputtering surface of the sputtering target 31 confronts the substrate surface of the disk substrate 11. A magnet unit 32 is arranged on a rear of the sputtering target 31. A rotary shield part 33 is arranged between the disk substrate 11 and the sputtering target 31. Although not shown in FIG. 5, the sputtering apparatus 30 further includes an exhaust system for exhausting the inside of the chamber, a gas introducing system for introducing gasses into the chamber, and a power supply for supplying discharging power to the sputtering target 31.

The sputtering apparatus 30 traps discharge plasma including electrons and gas ions, such as Ar ions, in a vicinity of the sputtering surface of the sputtering target 31, along the lines of magnetic force of the magnet unit 32. The Ar ions cause the target material at a predetermined region on the target surface of the sputtering target 31 to be sputtered onto the substrate surface of the disk substrate 11 as sputtered particles. The sputtered particles move approximately linearly from the sputtering target 31 towards the substrate surface to form the seed layer 12. An erosion region 31a is formed in the predetermined region of the target surface of the sputtering target 31 where the sputtering particles originated.

The rotary shield part 33 has a rotary shaft 33a provided coaxially to the disk substrate 11, the sputtering target 31 and the magnet unit 32. The rotary shield part 33 also has a plurality of shield plates 33b that extend radially outwards from the rotary shaft 33a. Surfaces of the shield plates 33b are perpendicular to the target surface of the sputtering target 31.

The shield plates 33b are arranged at equal angular intervals around the rotary shaft 33a. A length of each shield plate 33b in the radial direction, from the center of the rotary shaft 33a to the outer peripheral edge of the shield plate 33b, is approximately the same as or is greater than the radius of the disk substrate 11. Hence, the sputtering particles moving in the radial direction of the disk substrate 11 reach the substrate surface of the disk substrate 11 more easily than the sputtering particles moving in the circumferential direction of the disk substrate 11, so as to suppress the sputtering particles from moving in a direction away from the radial direction to become deposited with an inclination on the substrate surface. In addition, the arrangement and dimensions of the shield plates 33b also prevent the sputtering particles from passing the central portion of the disk substrate 11 to become deposited on the opposite surface of the disk substrate 11. Accordingly, crystal grains having small deviations in the growth direction are grown on the substrate surface of the disk substrate 11 to form the seed layer 12.

The length of each shield plate 33b in the radial direction may be smaller than the radius of the disk substrate 11. In this case, it is still possible to prevent the sputtering particles from passing the central portion of the disk substrate 11 to become deposited on the opposite surface of the disk substrate 11.

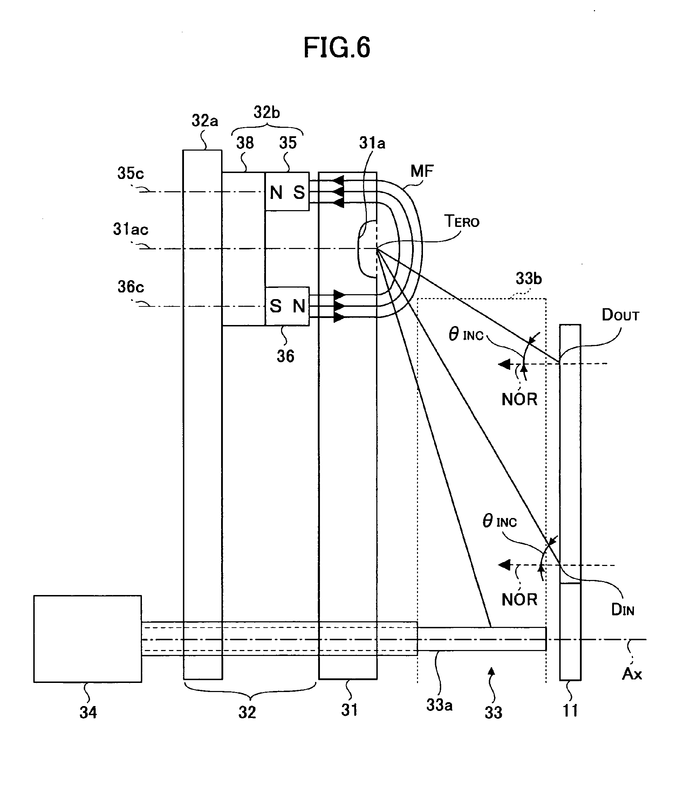

The rotary shaft 33a of the rotary shield part 33 is connected to a rotary driving part 34 (shown in FIG. 6 which will be described later) that is provided on the rear of the sputtering target 31, and the rotary shield part 33 is rotated by the rotary driving part 34 at a rotational speed of 60 rpm, for example. By rotating the rotary shield part 33, the thickness of the seed layer 12 can be made uniform, and the sputtering particles will adhere uniformly on the shield plates 33b so that the maintenance interval of the shield plates 33b can be extended. Of course, the rotary shield part 33 does not necessarily have to be rotated.

FIG. 6 is a cross sectional view showing an important part of the sputtering apparatus 30 shown in FIG. 5. FIG. 6 is a cross sectional view cut along a plane passing a center axis Ax which approximately matches the center axes of the disk substrate 11, the sputtering target 31 and the magnet unit 32 shown in FIG. 5. Since the structures above and below the center axis Ax are symmetrical about the center axis Ax, only the upper structure is shown in FIG. 6.

As shown in FIG. 6, the magnet unit 32 includes a magnet base 32a and a magnet part 32b. The magnet part 32b is made up of an outer ring-shaped magnet 35, an inner ring-shaped magnet 36 and a yoke 38. The outer and inner ring-shaped magnets 35 and 36 are formed by permanent magnets that are magnetized in the direction of the arrows shown in FIG. 6. The yoke 38 is made of a soft magnetic material. Lines of magnetic force (hereinafter simply referred to as lines MF) of the magnet part 32b extend from the N-pole of the inner ring-shaped magnet 36, pass through the sputtering target 31, turn and pass through the sputtering target 31 again, and return to the S-pole of the outer ring-shaped magnet 35. Ar ions forming the discharge plasma trapped along the lines MF cause the sputtering particles to be discharged from the sputtering surface of the sputtering target 31, and cause the erosion region 31a to be formed on the sputtering surface.

The outer and inner ring-shaped magnets 35 and 36 may be formed by electromagnets.

In this embodiment, the magnet part 32b is arranged so that the erosion region 31a of the sputtering target 31 is located on the outer side of the outer peripheral side of the disk substrate 11, to cause the sputtering particles to move towards the disk substrate 11 at an inclination from the outer peripheral side to the inner peripheral side, that is, to cause the sputtering particles to become incident to the substrate surface at an inclination angle θ_{INC}. The inclination angle θ_{INC} of the sputtering particles with respect to the disk substrate 11 is preferably set in a range of 38.7 degrees to less than 90 degrees. By setting the inclination angle θ_{INC} in this range, the crystal orientation inclination angle θ_{CRY} shown in FIG. 3 formed by the substrate normal NOR and the [100] crystal orientation of the seed layer 12 that is formed can be set in a rage of 2.1 degrees to less than 5.4 degrees. As a result, it is possible to improve the crystal orientation of the recording layer 18 in the circumferential direction of the disk substrate 11, as may be seen from the embodiment samples which will be described later.

In order to obtain a satisfactory sputtering efficiency with the arrangement of the sputtering apparatus 30 described above, the inclination angle θ_{INC} is preferably set in a range of 38.7 degrees to 80 degrees or less, and more preferably in a range of 38.7 degrees to 75 degrees or less. Furthermore, from the point of view of further improving the crystal orientation of the recording layer 18 in the circumferential direction of the disk substrate 11, the inclination angle θ_{INC} is preferably set in a range of 43.0 degrees to 75 degrees or less. The upper limit of the crystal orientation inclination angle θ_{CRY}, that is, 5.4 degrees, is based on the fact that the crystal orientation inclination angle θ_{CRY} is approximately 6% of the inclination angle θ_{INC} from the second and third embodiment samples which will be described later.

The inclination angle θ_{INC} is defined as an angle formed between the substrate normal NOR and an imaginary incident line that connects a center T_{ERO} of the erosion region 31a and a depositing position in a track region on the substrate surface of the disk substrate 11. The track region is defined as the region between an inner (or innermost) peripheral position D_{IN} and an outer (or outermost) peripheral position D_{OUT}. The center T_{ERO} of the erosion region 31a is defined as an intersection of the sputtering surface of the sputtering target 31 before the sputtering starts and a bisector 35ac between a centerline 35c of the outer ring-shaped magnet 35 and a centerline 36c of the inner ring-shaped magnet 36.

Since the shield plates 33b are provided in the vicinity of the center axis Ax, the sputtering particles moving in the radial direction of the disk substrate 11 so as to pass beyond the center axis Ax will be blocked by the shield plates 33b. Hence, such sputtering particles adhere on the shield plates 33b and are prevented from passing beyond the center axis Ax and reaching the disk substrate 11. Hence, the seed layer 12 that is formed on the substrate surface of the disk substrate 11 is substantially formed by the crystal grains that are inclined towards the outer peripheral side of the disk substrate 11 in the radial direction, and the crystal grain orientation of the seed layer 12 is approximately uniform. For this reason, the crystallinity of the seed layer 12 improves and the inclination of the crystal lattices of the seed layer 12 becomes approximately uniform, to thereby suppress locally non-uniform in-plane crystal orientation of the recording layer 18.

In a step shown in FIG. 4B, the underlayer 13, the first magnetic layer 14, the nonmagnetic coupling layer 15 and the second magnetic layer 16 which are made of the materials described above are successively formed on the seed layer 12 by sputtering. The layers 13 through 16 are formed by setting the Ar gas pressure to 0.67 Pa and successively sputtering the layers 13 through 16 by the D.C. magnetron sputtering so that the sputtering particles reach the substrate surface of the disk substrate 11 at an incident angle that is approximately perpendicular to the substrate surface. The disk substrate 11 may be heated again before forming the first magnetic layer 14 or the nonmagnetic coupling layer 15. The heating temperature of the disk substrate 11 in this case is set to 270°C or less, and preferably in a range of 200°C to 240°C.

Next, in a step shown in FIG. 4C, the protection layer 19 made of DLC or the like is formed on the second magnetic layer 16 to a thickness of 3 nm, for example, by sputtering, CVD, FCA or the like. The steps from the substrate heating step shown in FIG. 4A to the protection layer forming step shown in FIG. 4C are carried out within the chamber. Preferably, the disk substrate 11 is not exposed to the outside even during transport while each of these steps are carried out.

The step shown in FIG. 4C may use an organic liquid lubricant that is diluted by a fluoric solvent or the like, and the lubricant layer 20 may be formed to a thickness of 1.5 nm, for example, by pulling, spin-coating, liquid submersion, steam jet and the like. The magnetic recording medium 10 is created in this manner by the above described steps.

According to this embodiment of the method, in the step of forming the seed layer 12, the erosion region 31a of the sputtering target 31 is located on the outer side of the outer peripheral side of the disk substrate 11, to cause the sputtering particles to move towards the disk substrate 11 at an inclination from the outer peripheral side to the inner peripheral side, that is, to cause the sputtering particles to become incident to the substrate surface at the inclination angle θ_{INC} with respect to the substrate normal NOR. For this reason, it is possible to suppress the inclination angle of the crystal grains of the seed layer 12 from becoming non-uniform, and to suppress the [100] crystal orientation of the crystal grains of the seed layer 12 from becoming non-uniform. Therefore, the crystal orientation of the recording layer 18 in the circumferential direction of the disk substrate 11 is improved, and it is possible to increase the recording density of the magnetic recording medium 10.

In addition, according to this embodiment of the method, the rotary shield part 33 is provided between the disk substrate 11 and the sputtering target 31. Hence, it is possible to prevent the sputtering particles from passing the central portion and/or the outer peripheral portion of the disk substrate 11 to become deposited on the opposite surface of the disk substrate 11. Consequently, it is possible to prevent the crystal grains of the seed layer 12 from inclining towards the circumferential direction or the inner peripheral side of the disk substrate 11, to further suppress the inclination angle of the crystal grains of the seed layer 12 from becoming non-uniform. Therefore, it is possible to suppress the [100] crystal orientation of the crystal grains of the seed layer 12 from becoming non-uniform, and the crystal orientation of the recording layer 18 in the circumferential direction of the disk substrate 11 is improved.

Next, a description will be given of samples created by this embodiment (hereinafter referred to as embodiment samples).

### [First Embodiment Sample Emb-1]

The D.C. magnetron sputtering apparatus 30 was used to form a magnetic disk having the following structure, as the magnetic recording medium 10.

The magnetic disk created includes a glass substrate 11 having a diameter of 65 mm, an AlRu seed layer 12 having a thickness of 10 nm, a Cr underlayer 13 having a thickness of 4.5 nm, a Co₉₀Cr₁₀ first magnetic layer 14 having a thickness of 2 nm, a Ru nonmagnetic spacer layer 15 having a thickness of 0.7 nm, a CoCrPt₁₂B₇Cu₄ second magnetic layer 16 having a thickness of 15 nm, and a C protection layer 19 having a thickness of 4.5 nm.

The glass substrate 11 was heated to 180°C within vacuum by the PBN heater prior to forming the AlRu seed layer 12. The glass substrate 11 was heated similarly to 230°C prior to forming the Ru nonmagnetic spacer layer 15. Using the sputtering apparatus 30 shown in FIGS. 5 and 6, the erosion region 31a was formed in the AlRu sputtering target 31 between a position where the radius is 67.0 mm and a position where the radius is 77.0 mm from the disk center of the glass substrate 11. A center position of the erosion region 31a is located at a radius of 72.0 mm from the disk center of the glass substrate 11. The incident angle θ_{INC} of the sputtering particles from the outer peripheral side of the glass substrate 11 was set to a center incident angle of 46.4 degrees (of a range from 42.8 degrees to 49.6 degrees) at the outer (or outermost) peripheral position D_{OUT} shown in FIG. 6, and to a center incident angle of 56.3 degrees (of a range from 54.0 degrees to 58.4 degrees) at the inner (or innermost) peripheral position D_{IN} shown in FIG. 6. The outer (or outermost) and inner (or innermost) peripheral positions D_{OUT} and D_{IN} are respectively located at radii of 30 mm and 12 mm from the disk center of the glass substrate 11. The AlRu seed layer 12 was formed in an Ar gas with an Ar gas pressure of 0.67 Pa. The shield plates 33b of the rotary shield part 33 were provided at an angular interval of 30 degrees along the circumferential direction of the glass substrate 11, and the rotary shield part 31 was rotated at 60 rpm.

### [Second Embodiment Sample Emb-2]

Using the sputtering apparatus 30 shown in FIGS. 5 and 6, the erosion region 31a was formed in the AlRu sputtering target 31 between a position where the radius is 47.0 mm and a position where the radius is 77.0 mm from the disk center of the glass substrate 11. A center position of the erosion region 31a is located at a radius of 62.0 mm from the disk center of the glass substrate 11. The incident angle θ_{INC} of the sputtering particles from the outer peripheral side of the glass substrate 11 was set to a center incident angle of 38.7 degrees (of a range from 23.0 degrees to 49.6 degrees) at the outer (or outermost) peripheral position D_{OUT} shown in FIG. 6, and to a center incident angle of 51.3 degrees (of a range from 41.2 degrees to 58.4 degrees) at the inner (or innermost) peripheral position D_{IN} shown in FIG. 6. Otherwise, the second embodiment sample Emb-2 was created under the same conditions as the first embodiment sample Emb-1 described above.

### [Third Embodiment Sample Emb-3]

Using the sputtering apparatus 30 shown in FIGS. 5 and 6, the erosion region 31a was formed in the AlRu sputtering target 31 between a position where the radius is 47.0 mm and a position where the radius is 57.0 mm from the disk center of the glass substrate 11. A center position of the erosion region 31a is located at a radius of 52.0 mm from the disk center of the glass substrate 11. The incident angle θ_{INC} of the sputtering particles from the outer peripheral side of the glass substrate 11 was set to a center incident angle of 28.8 degrees (of a range from 23.0 degrees to 34.0 degrees) at the outer (or outermost) peripheral position D_{OUT} shown in FIG. 6, and to a center incident angle of 45.0 degrees (of a range from 41.2 degrees to 48.4 degrees) at the inner (or innermost) peripheral position D_{IN} shown in FIG. 6. Otherwise, the third embodiment sample Emb-3 was created under the same conditions as the first embodiment sample Emb-1 described above.

### [First Comparison Example Cmp-1]

When forming the AlRu seed layer 12 by the perpendicular sputtering, the erosion region 31a of the AlRu sputtering target 31 was set to a position approximately confronting the glass substrate 11. The incident angle θ_{INC} of the sputtering particles from the outer peripheral side of the glass substrate 11 was set to 0. No rotary shield part 33 was used. Otherwise, the first comparison example Cmp-1 was created under the same conditions as the first embodiment sample Emb-1 described above.

The crystal orientation inclination angle θ_{CRY} of the crystal lattices of the AlRu seed layer 12 was obtained for each of the first and second embodiment samples Emb-1 and Emb-2 and the first comparison example Cmp-1.

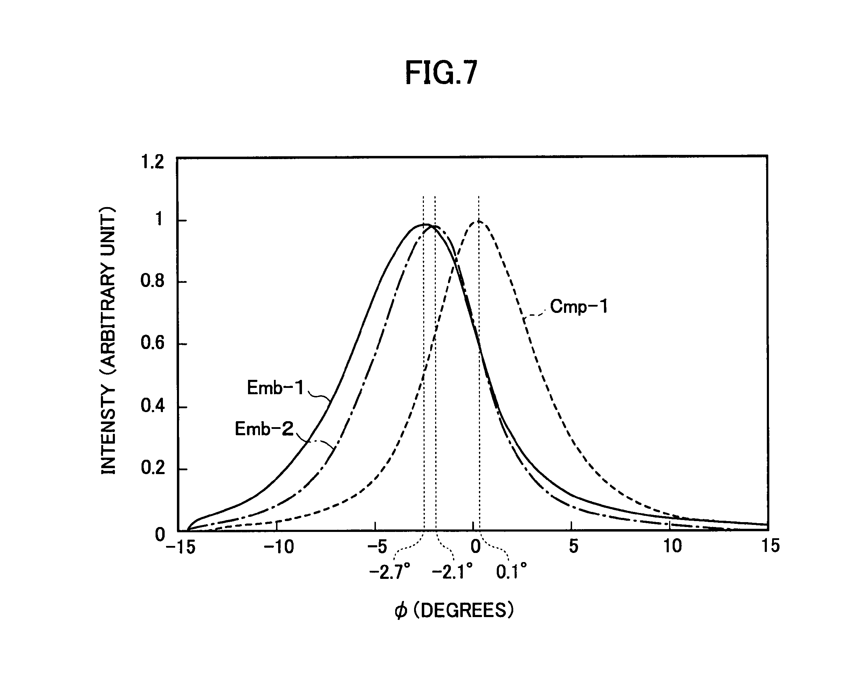

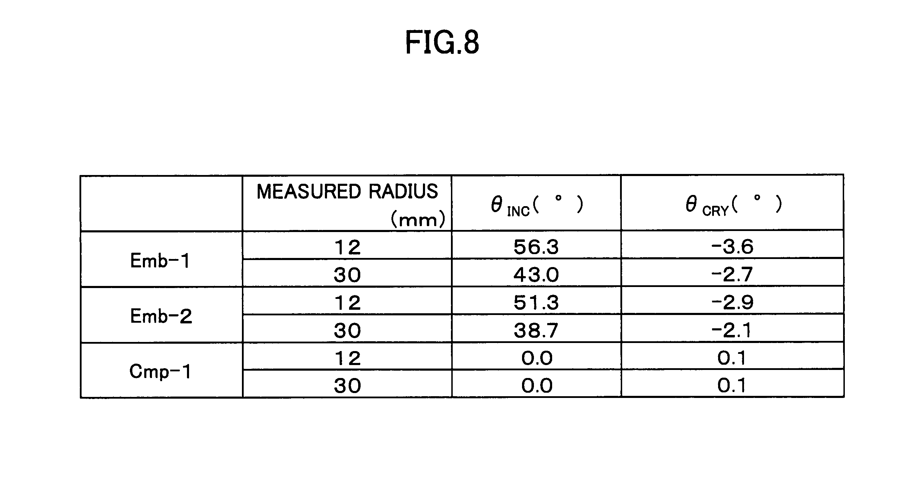

FIG. 7 is a diagram showing rocking curves of the AlRu seed layers 12 of first and second embodiment samples Emb-1 and Emb-2 and the first comparison example Cmp-1. FIG. 8 is a diagram showing a relationship of the incident angles θ_{INC} of AlRu seed layers 12 and crystal orientation inclination angles θ_{CRY} of the first and second embodiment samples Emb-1 and Emb-2 and the first comparison example Cmp-1.

The results of FIGS. 7 and 8 were obtained by measuring the rocking curves for the (100) face (X-ray diffraction angle (or angle of diffraction) 2θ = 29.7 degrees) of the AlRu seed layers 12 from the outer peripheral side to the inner peripheral side of the magnetic disks (first and second embodiment samples Emb-1 and Emb-2 and the first comparison example Cmp-1) using an X-ray diffractometer (Cu-Kα ray), with a scan angle Ø taking a negative value on the outer peripheral side and a positive value on the inner peripheral side of the magnetic disks. In a case where the peak of the rocking curve occurs when the scan angle Ø takes a negative value, the (100) face is inclined by the scan angle Ø towards the outer peripheral side of the magnetic disk, that is, the [100] crystal orientation is inclined by the scan angle Ø (crystal orientation inclination angle θ_{CRY}) from the substrate normal NOR towards the outer peripheral side of the magnetic disk. When making the measurements, the layers above the AlRu seed layer 12, namely, the Co underlayer 13 up to the protection layer 19, were not formed on the magnetic disks in order to reduce noise in the rocking curves, and the thickness of the AlRu seed layer 12 was set to 100 nm.

As may be seen from FIGS. 7 and 8, the peak of the rocking curve appears when the scan angle Ø is approximately 0.1 degrees for the first comparison example Cmp-1 which employs the perpendicular sputtering with the incident angle θ_{INC} of 0. On the other hand, the peak of the rocking curve appears when the scan angle Ø is -3.6 degrees for the first embodiment sample Emb-1 which employs the inclined sputtering with the incident angle θ_{INC} of 56.3 degrees (at the measured radius of 12 mm). Furthermore, at the measured radius of 30 mm, the crystal orientation inclination angle θ_{CRY} of the AlRu seed layer 12 is approximately 6% of the incident angle θ_{INC} of the sputtering particles for both the first and second embodiment samples Emb-1 and Emb-2. Thus, for both the first and second embodiment samples Emb-1 and Emb-2, it was confirmed that the [100] crystal orientation of the AlRu seed layer 12 is inclined towards the outer peripheral side of the magnetic disk relative to the substrate normal NOR, and the inclination angle θ_{INC} and the crystal orientation inclination angle θ_{CRY} are approximately proportional to each other.

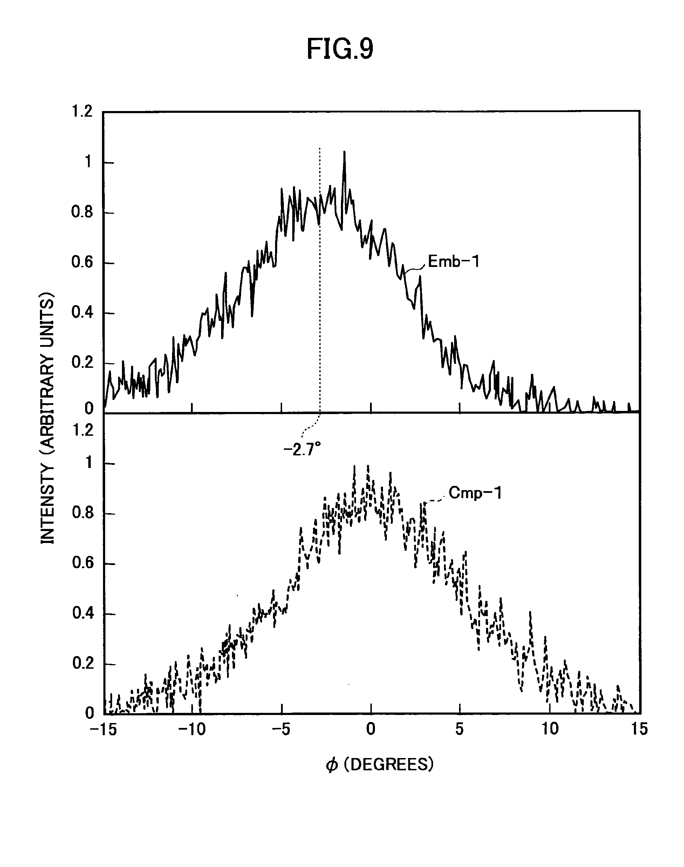

FIG. 9 is a diagram showing rocking curves of the CoCrPt₁₂B₇Cu₄ second magnetic layers 16 of the first embodiment sample Emb-1 and the first comparison example Cmp-1. The results of FIG. 9 were obtained by measuring the rocking curves for the (110) face of the CoCrPt₁₂B₇Cu₄ second magnetic layers 16 of the first embodiment sample Emb-1 and the first comparison example Cmp-1, similarly to obtaining the results shown in FIG. 7. In FIG. 9, when the peak of the rocking curve appears when the scan angle Ø takes a negative value, the (110) face of the CoCrPt₁₂B₇Cu₄ second magnetic layer 16 (for the first embodiment sample Emb-1) is inclined towards the outer peripheral side of the magnetic disk by an angle corresponding to the scan angle Ø. FIG. 9 shows the results for the case where the X-ray diffraction angle 2θ = 73.55 degrees, and the measurements are made at the measured radius of 30 mm.

As may be seen from FIG. 9, the peak of the rocking curve appears when the scan angle Ø is approximately 0 and the (110) face of the CoCrPt₁₂B₇Cu₄ second magnetic layer 16 is not inclined for the first comparison example Cmp-1. On the other hand, the peak of the rocking curve appears when the scan angle Ø is -2.7 degrees and the (110) face of the crystal grains of the CoCrPt₁₂B₇Cu₄ second magnetic layer 16, having the c-axis or the axis of easy magnetization arranged in the radial direction of the magnetic disk, is inclined towards the outer peripheral side of the magnetic disk for the first embodiment sample Emb-1. The scan angle Ø of -2.7 degrees at which the rocking curve has the peak for the CoCrPt₁₂B₇Cu₄ second magnetic layer 16, matches the scan angle Ø of -2.7 degrees at which the rocking curve has the peak for the AlRu seed layer 12 in FIGS. 7 and 8, for the first embodiment sample Emb-1. In other words, by inclining the (100) face of the AlRu seed layer 12, the inclination of the (100) face of the AlRu seed layer 12 is inherited to the Cr under layer 13, the Co₉₀Cr₁₀ first magnetic layer 14 and the Ru nonmagnetic coupling layer 15, to thereby incline the (110) face of the CoCrPt₁₂B₇Cu₄ second magnetic layer 16. By inclining the (110) face of the CoCrPt₁₂B₇Cu₄ second magnetic layer 16 in this manner, the c-axis or the axis of easy magnetization of the CoCrPt₁₂B₇Cu₄ second magnetic layer 16 becomes oriented in the circumferential direction of the magnetic disk, and it was confirmed that the crystal orientation of the CoCrPt₁₂B₇Cu₄ second magnetic layer 16 in the circumferential direction improves.

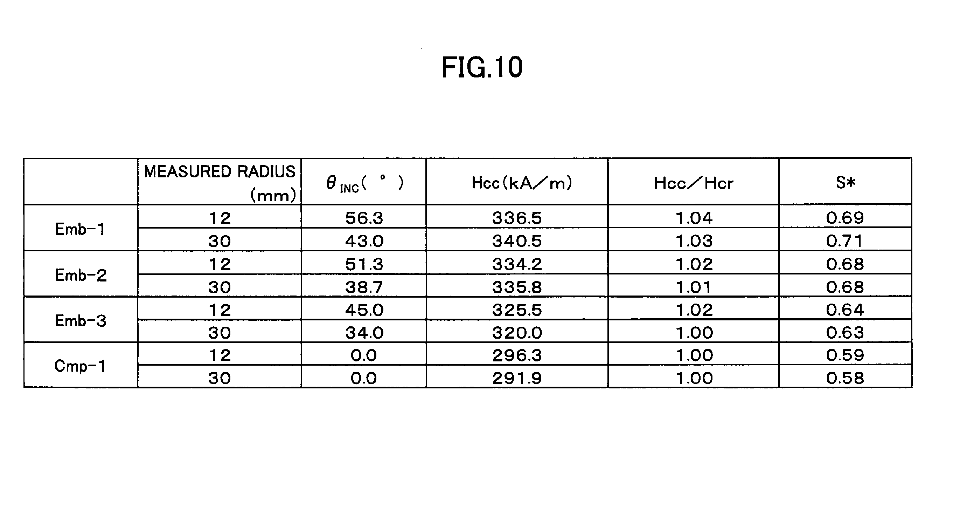

FIG. 10 is a diagram showing magnetic characteristics of magnetic disks according to the first through third embodiment samples Emb-1 through Emb-3 and the first comparison example Cmp-1. The magnetic characteristics of the second magnetic layer 16 were obtained using a vibration sample type magnetometer, by applying magnetic fields in the circumferential direction and the radial direction of the magnetic disks and measuring the corresponding hysteresis loops, to obtain a circumferential coercivity Hcc, an orientation Hcc/Hcr, and a circumferential coercivity squareness ratio S*, where Hcr denotes a radial direction coercivity. When the orientation Hcc/Hcr = 1.00, the axis of easy magnetization (or c-axis) of the second magnetic layer 16 is isotropically oriented in-plane. It may be seen from FIG. 10 that the larger the orientation Hcc/Hcr, the more the orientation of the axis of easy magnetization in the circumferential direction is promoted. It may also be seen from FIG. 10 that the larger the circumferential coercivity squareness ratio S*, the more the orientation of the axis of easy magnetization in the circumferential direction is promoted.

In FIG. 10, the orientation Hcc/Hcr for the first comparison example Cmp-1 is 1.00, which means that the crystal grains of the second magnetic layer 16 is isotropically oriented. On the other hand, the orientation Hcc/Hcr for the first embodiment sample Emb-1 is 1.04 at the measured radius of 12 mm and 1.03 at the measured radius of 30 mm, which means that the orientation of the axis of easy magnetization of the second magnetic layer 16 in the circumferential direction is promoted. The circumferential coercivity squareness ratio S* is also improved for the first embodiment sample Emb-1 when compared to the first comparison example Cmp-1, and it may also be seen from the circumferential coercivity squareness ratio S* that the orientation of the axis of easy magnetization of the second magnetic layer 16 in the circumferential direction is promoted for the first embodiment sample Emb-1.

The third embodiment sample Emb-3 employs the inclined sputtering with the incident angle θ_{INC} of 45.0 degrees at the measured radius of 12 mm and 28.8 at the measured radius of 30 mm. Otherwise, the third embodiment sample Emb-3 was created under the same conditions as the first and second embodiment samples Emb-1 and Emb-2.

The electromagnetic conversion characteristics improve when the orientation Hcc/Hcr exceeds 1.00 of the first comparison example Cmp-1, that is, greater than or equal to 1.01. From the relationships of the inclination angle θ_{INC} and the orientation Hcc/Hcr for the first through third embodiment samples Emb-1 through Emb-3, it may be seen that the orientation Hcc/Hcr becomes 1.01 when the inclination angle θ_{INC} is 38.7 degrees (at the measured radius of 30 mm for the second embodiment sample Emb-2), and that the inclination angle θ_{INC} is preferably set to 38.7 degrees or greater. The present inventor has confirmed through studies that the electromagnetic conversion characteristic greatly improve when the orientation Hcc/Hcr is 1.02 or greater. Since the inclination angle θ_{INC} is 43.0 degrees (at the measured radius of 30 mm for the first embodiment sample Emb-1) when the orientation Hcc/Hcr becomes 1.02, the inclination angle θ_{INC} is more preferably set to 43.0 or greater. In addition, from the relationships of the inclination angle θ_{INC} and the crystal orientation inclination angle θ_{CRY} of the AlRu seed layer 12 shown in FIG. 8, the crystal orientation inclination angle θ_{CRY} of the AlRu seed layer 12 that is formed is 2.1 degrees when the inclination angle θ_{INC} is 38.7 degrees. Hence, it may be seen that the crystal orientation inclination angle θ_{CRY} is preferably set to 2.1 degrees or greater, and more preferably set to 2.7 degrees or greater which is the crystal orientation inclination angle θ_{CRY} for the case where the inclination angle θ_{INC} is 43.0.

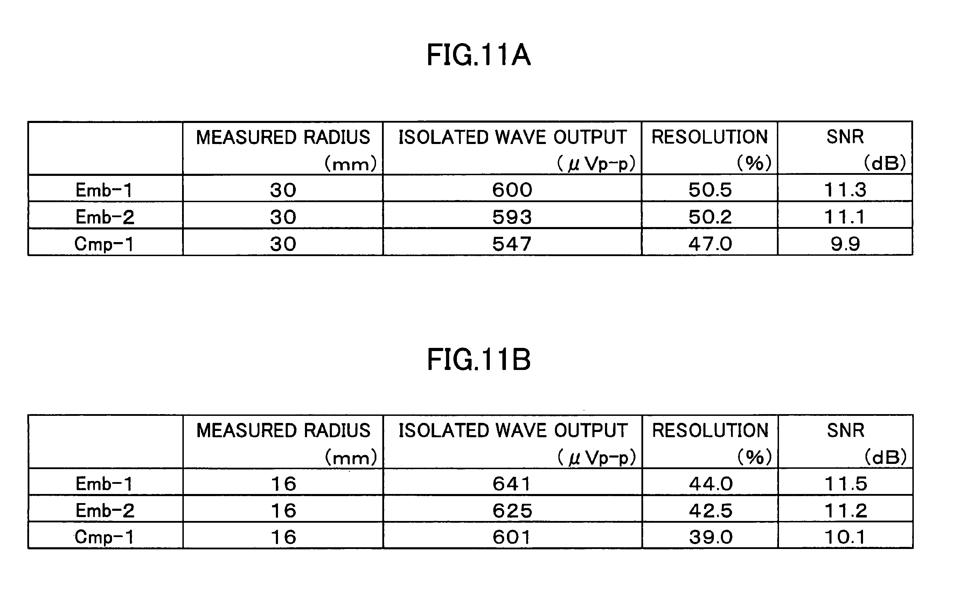

FIGS. 11A and 11B are diagrams showing the electromagnetic conversion characteristics of magnetic disks according to the first and second embodiment samples Emb-1 and Emb-2 and the first comparison example Cmp-1. The electromagnetic conversion characteristics shown in FIG. 11A and 11B were obtained using a composite magnetic head which includes an inductive recording element and a Giant Magneto-Resistive (GMR) reproducing element, to measure the isolated wave output, the resolution and the SNR. The isolated wave output (µVₚ₋ₚ) indicates an output average at a linear recording density of 104 kFCI. The resolution (%) is obtained from (average output at 104 kFCI)/(average output at 414 kFCI) x 100, and the SNR (dB) was obtained from 20 x log(S/N) based on the average output S (µVₚ₋ₚ) at 414 kFCI and the medium noise N (µVᵣₘₛ).

It may be seen from FIG. 11A that the resolution and the SNR of the first and second embodiment samples Emb-1 and Emb-2 at the measured radius of 30 mm are improved compared to the first comparison example Cmp-1. As shown in FIG. 10 described above, the orientation Hcc/Hcr of the first and second embodiment samples Emb-1 and Emb-2 are improved compared to the first comparison example Cmp-1. Hence, it may be seen that the improved orientation Hcc/Hcr improves the resolution and the SNR of the first and second embodiment samples Emb-1 and Emb-2. In addition, when the first and second embodiment samples Emb-1 and Emb-2 are compared, it may be seen that the first embodiment sample Emb-1 which has a larger orientation Hcc/Hcr than the second embodiment sample Emb-2 has the resolution and the SNR that are improved compared to those of the second embodiment sample Emb-2. Therefore, it was confirmed that the larger the inclination angle θ_{INC}, that is, the larger the crystal orientation inclination angle θ_{CRY}, the more the resolution and the SNR are improved.

Similarly, it may also be seen from FIG. 11B that the resolution and the SNR of the first and second embodiment samples Emb-1 and Emb-2 at the measured radius of 16 mm are improved compared to the first comparison example Cmp-1.

Next, a description will be given of fourth through sixth embodiment samples Emb-4 through Emb-6 and a comparison example Cmp-2 which have a glass substrate 11 with a mechanically textured substrate surface.

The fourth embodiment sample Emb-4 was created similarly to the first embodiment sample Emb-1 described above, except that the substrate surface of the glass substrate 11 was subjected to a mechanical texturing using a polishing and cleaning apparatus, so as to provide the texturing in the circumferential direction of the magnetic disk with an average surface roughness Ra of 0.3 nm.

The fifth embodiment sample Emb-5 was created similarly to the second embodiment sample Emb-2 described above, except that the substrate surface of the glass substrate 11 was subjected a mechanical texturing, similarly to that of the fourth embodiment sample Emb-4.

The sixth embodiment sample Emb-6 was created similarly to the third embodiment sample Emb-3 described above, except that the substrate surface of the glass substrate 11 was subjected a mechanical texturing, similarly to that of the fourth embodiment sample Emb-4.

The second comparison example Cmp-2 was created similarly to the first comparison example Cmp-1 described above, except that the substrate surface of the glass substrate 11 was subjected a mechanical texturing, similarly to that of the fourth embodiment sample Emb-4.

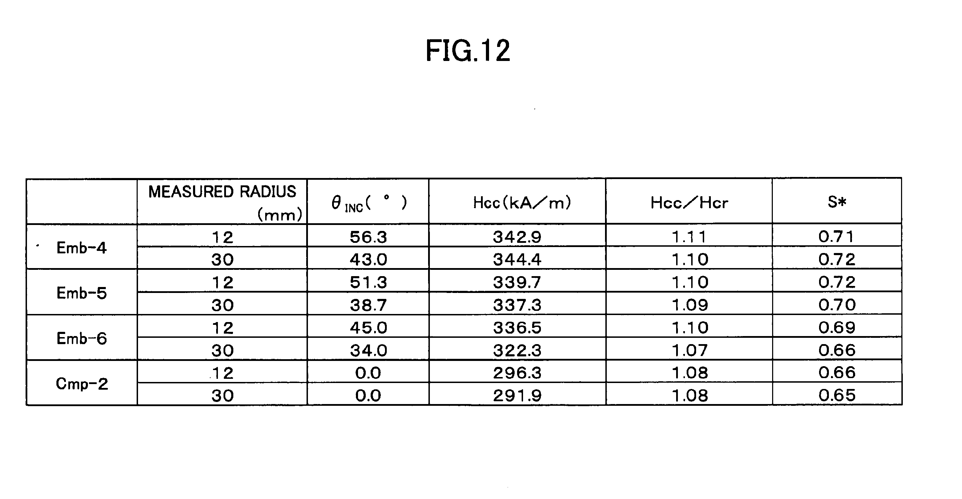

FIG. 12 is a diagram showing magnetic characteristics of magnetic disks according to the fourth through sixth embodiment samples Emb-4 through Emb-6 and the second comparison example Cmp-2. The magnetic characteristics shown in FIG. 12 were measured similarly as in the case of the magnetic characteristic shown in FIG. 10.

In FIG. 12, the orientation Hcc/Hcr for the second comparison example Cmp-2 is 1.08 which is higher than 1.00 of the first comparison example Cmp-1. The improved orientation Hcc/Hcr for the second comparison example Cmp-2 when compared to that of the first comparison example Cmp-1 is due to the mechanical texturing provided on the substrate surface. On the other hand, the orientation Hcc/Hcr for the fourth embodiment sample Emb-4 is 1.11 at the measured radius of 12 mm and 1.10 at the measured radius of 30 mm, which means that the orientation of the axis of easy magnetization of the second magnetic layer 16 in the circumferential direction is promoted. In other words, the orientation of the axis of easy magnetization of the second magnetic layer 16 in the circumferential direction is further promoted by the mechanically textured substrate surface, in addition to the AlRu seed layer 12 that is formed by the inclined sputtering. The circumferential coercivity squareness ratio S* is also improved for the fourth embodiment sample Emb-4 when compared to the second comparison example Cmp-2, and it may also be seen from the circumferential coercivity squareness ratio S* that the orientation of the axis of easy magnetization of the second magnetic layer 16 in the circumferential direction is promoted for the fourth embodiment sample Emb-4.

The electromagnetic conversion characteristics improve when the orientation Hcc/Hcr exceeds 1.08 of the second comparison example Cmp-2, that is, greater than or equal to 1.09. From the relationships of the inclination angle θ_{INC} and the orientation Hcc/Hcr for the fourth through sixth embodiment samples Emb-4 through Emb-6, it may be seen that the orientation Hcc/Hcr becomes 1.09 when the inclination angle θ_{INC} is 38.7 degrees (at the measured radius of 30 mm for the fifth embodiment sample Emb-5), and that the inclination angle θ_{INC} is preferably set to 38.7 degrees or greater. The present inventor has confirmed through studies that the electromagnetic conversion characteristic greatly improve particularly when the orientation Hcc/Hcr is 1.10 or greater. Since the inclination angle θ_{INC} is 43.0 degrees (at the measured radius of 30 mm for the fourth embodiment sample Emb-4) when the orientation Hcc/Hcr becomes 1.10, the inclination angle θ_{INC} is more preferably set to 43.0 or greater.

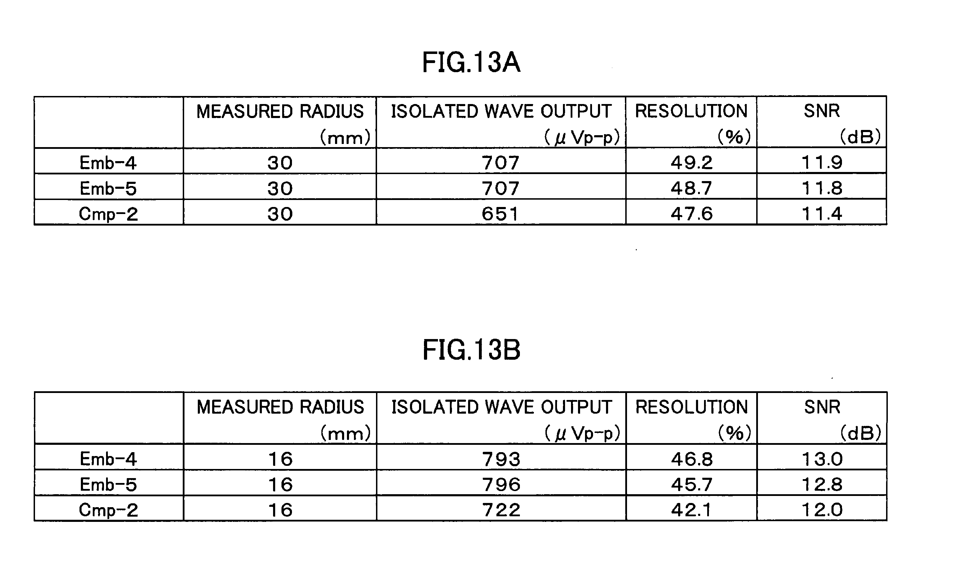

FIGS. 13A and 13B are diagrams showing electromagnetic conversion characteristics of magnetic disks according to the fourth through sixth embodiment samples Emb-4 through Emb-6 and the second comparison example Cmp-2. The electromagnetic conversion characteristics shown in FIGS. 13A and 13B were obtained similarly as in the case of the electromagnetic conversion characteristics shown in FIGS. 11A and 11B.

It may be seen from FIG. 13A that the resolution and the SNR of the fourth and fifth embodiment samples Emb-4 and Emb-5 at the measured radius of 30 mm are improved compared to the second comparison example Cmp-2. As shown in FIG. 12 described above, the orientation Hcc/Hcr of the fourth and fifth embodiment samples Emb-4 and Emb-5 are improved compared to the second comparison example Cmp-2. Hence, it may be seen that the improved orientation Hcc/Hcr improves the resolution and the SNR of the fourth and fifth embodiment samples Emb-4 and Emb-5. In addition, when the fourth and fifth embodiment samples Emb-4 and Emb-5 are compared, it may be seen that the fourth embodiment sample Emb-4 which has a larger orientation Hcc/Hcr than the fifth embodiment sample Emb-5 has the resolution and the SNR that are improved compared to those of the fifth embodiment sample Emb-5. Therefore, it was confirmed that the larger the inclination angle θ_{INC}, that is, the larger the crystal orientation inclination angle θ_{CRY}, the more the resolution and the SNR are improved.

Similarly, it may also be seen from FIG. 13B that the resolution and the SNR of the fourth and fifth embodiment samples Emb-4 and Emb-5 at the measured radius of 16 mm are improved compared to the second comparison example Cmp-2.

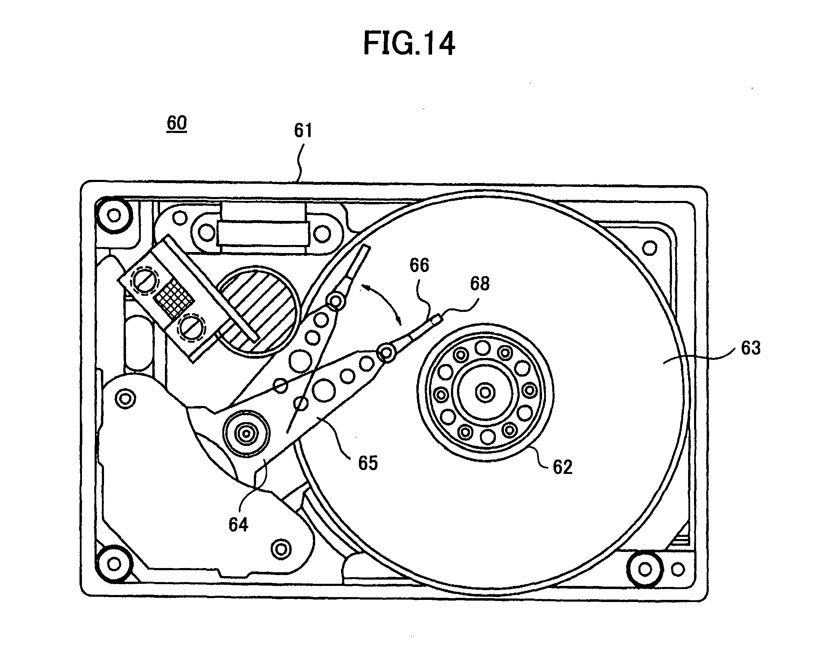

FIG. 14 is a plan view showing an important part of an embodiment of a magnetic storage apparatus according to the present invention.

As shown in FIG. 14, a magnetic storage apparatus 60 generally includes a housing 61. A hub 62, a plurality of magnetic recording media 63, an actuator unit 64, a plurality of arms 65, a plurality of suspensions 66, and a plurality of recording and reproducing heads (composite heads) 68 are provided within the housing 61. The magnetic recording media 63 are mounted on the hub 62 which is rotated by a motor (not shown). The recording and reproducing head 68 is made up of a reproducing head and a recording head. For example an Magneto-Resistive (MR) element, a Giant Magneto-Resistive (GMR) element, a Tunneling Magneto-Resistive (TMR) element such as a Current-In-Plane (CIP) element and a Current-Perpendicular-to-Plane (CPP) element, and the like may be used as the reproducing head. On the other hand, an inductive head such as a thin film head may be used for the recording head. Each recording and reproducing head 68 is mounted on the tip end of a corresponding arm 65 via the suspension 66. The arms 65 are moved by the actuator unit 64. The basic construction of this magnetic storage apparatus is known, and a detailed description thereof will be omitted in this specification.

The magnetic storage apparatus 60 is characterized by the magnetic recording media 63. Each of the magnetic recording media 63 has the stacked structure of the embodiments of the magnetic recording medium described above in conjunction with FIGS. 1 through 13B. In other words, each of the magnetic recording media 63 may have the structure of the magnetic recording medium 10 shown in FIG. 1, for example. Of course, the number of magnetic recording media 63 is not limited and one or more magnetic recording media 63 may be provided. In the case where the magnetic recording medium 63 has the disk-shape as shown in FIG. 14, the crystal orientation of the recording layer 18 in the circumferential direction and the electromagnetic conversion characteristics are improved, and a high recording density can be realized by the magnetic recording medium 63.

The basic construction of the magnetic storage apparatus is not limited to that shown in FIG. 14. In addition, the magnetic recording medium 63 used in the present invention is not limited to a magnetic disk. For example, the magnetic recording medium 63 may be a magnetic tape. When using the magnetic tape as the magnetic recording medium 63, the seed layer may be formed on a tape-shaped plastic film such as PET, PEN and polyamide films forming the substrate. In this case, the crystal orientation of the recording layer can be improved in the longitudinal direction of the tape-shaped film, by sputtering the particles of the seed layer from one of two sides of the tape (two edges of the tape on both sides along the width of the tape) at an angle that is inclined by a predetermined angle from a normal to the tape surface.

Further, the present invention is not limited to these embodiments, but various variations and modifications may be made without departing from the scope of the present invention.

## Claims

1. A magnetic recording medium comprising:
a substrate having a substrate surface;
a seed layer provided on the substrate surface;
an underlayer provided on the underlayer; and
a recording layer provided on the underlayer,
wherein information is recorded in the recording layer by magnetizing the recording layer in a recording direction,
**characterized in that** the seed layer is formed by a polycrystal of crystal grains made of an alloy material having a B2 crystal structure, and a [100] crystal orientation of the crystal grains are inclined towards one of two sides partitioned by a plane that is formed by the recording direction and a substrate normal which is normal to the substrate surface.

2. The magnetic recording medium as claimed in claim 1, **characterized in that** the substrate has a disk-shape, and the [100] crystal orientation of the crystal grains are inclined in an outer peripheral side of the disk-shape.

3. The magnetic recording medium as claimed in claim 1 or 2, **characterized in that** an angle formed by the [100] crystal orientation of the crystal grains and the substrate normal is in a range of 2.1 degrees to less than 5.4 degrees.

4. The magnetic recording medium as claimed in any of claims 1 to 3, **characterized in that** the alloy material is selected from a group consisting of AlRu alloy, NiAl alloy and FeAl alloy.

5. The magnetic recording medium as claimed in claim 4, **characterized in that** the AlRu alloy has an Ru-content in a range of 45 at.% to 55 at.%.

6. The magnetic recording medium as claimed in any of claims 1 to 5, **characterized in that** the underlayer is made of Cr or a Cr-X alloy, where X is selected from a group consisting of Mo, W, V, B, Mo and alloys thereof.

7. The magnetic recording medium as claimed in claim 2, **characterized in that** the substrate is made of glass, and the substrate surface is mechanically textured.

8. The magnetic recording medium as claimed in any of claims 1 to 7, **characterized in that**:
the recording layer comprises a first magnetic layer, a nonmagnetic spacer layer and a second magnetic layer that are successively stacked on the underlayer, and
the first and second magnetic layers are antiferromagnetically exchange-coupled via the nonmagnetic spacer layer.

9. A method of producing a magnetic recording medium having a recording layer that is magnetized in a recording direction to record information in the recording layer, comprising the steps of:
(a) forming a seed layer on a substrate surface;
(b) forming an underlayer on the seed layer; and
(c) forming the recording layer on the underlayer,
**characterized in that** said step (a) uses a target that is made of an alloy material having a B2 crystal structure and confronts the substrate surface, and sputters, with respect to the substrate surface, sputtering particles of the target from one of two sides partitioned by a first plane that is formed by the recording direction and a substrate normal which is normal to the substrate surface in a predetermined direction inclined with respect to the substrate normal.

10. The method of producing the magnetic recording medium as claimed in claim 9,
**characterized in that** said step (a) sputters the sputtering particles with respect to the substrate surface in the predetermined direction within a second plane that is approximately perpendicular to the first plane.

11. The method of producing the magnetic recording medium as claimed in claim 9,
**characterized in that** said step (a) an inclination angle formed between the substrate normal and an imaginary incident line that connects a center of an erosion region of the target and a depositing position of the sputtering particles on the substrate surface is in a range of 38.7 degrees to less than 90 degrees.

12. The method of producing the magnetic recording medium as claimed in any of claims 9 to 11,
**characterized in that** said step (a) uses a disk-shaped substrate, and sputters the sputtering particles from an outer peripheral side of the disk-shaped substrate relative to the first plane.

13. The method of producing the magnetic recording medium as claimed in claim 12, further
**characterized by** the steps of:
(d) preventing the sputtering particles sputtered with respect to the substrate surface from reaching a surface of the substrate opposite to the substrate surface when carrying out said step (a).

14. The method of producing the magnetic recording medium as claimed in claim 13,
**characterized in that** said step (d) uses a shield part which confronts the substrate surface and has a shaft arranged coaxially to a center of the disk-shaped substrate and a plurality of shield plates extending radially from the shaft and arranged at equal angular intervals.

15. The method of producing the magnetic recording medium as claimed in claim 14,
**characterized in that** said step (d) rotates the shield part about the shaft.

16. The method of producing the magnetic recording medium as claimed in any of claims 9 to 15,
**characterized in that** said steps (b) and (c) respectively sputter sputtering particles with respect to the seed layer and the underlayer in a direction approximately perpendicular to the substrate surface.

17. A magnetic storage apparatus comprising:
at least one magnetic recording medium; and
a head to record and/or reproduce information to and/or from the magnetic recording medium,
wherein the magnetic recording medium comprises a substrate having a substrate surface, a seed layer provided on the substrate surface, an underlayer provided on the underlayer, and a recording layer provided on the underlayer,
information is recorded in the recording layer by magnetizing the recording layer in a recording direction, and
**characterized in that** the seed layer is formed by a polycrystal of crystal grains made of an alloy material having a B2 crystal structure, and a [100] crystal orientation of the crystal grains are inclined towards one of two sides partitioned by a plane that is formed by the recording direction and a substrate normal which is normal to the substrate surface.

18. The magnetic storage apparatus as claimed in claim 17, **characterized in that** the magnetic recording medium has a disk-shape.
